(19) **Europäisches Patentamt European Patent Office Office européen des brevets**

(11) **EP 4 357 168 B1**

(12) **EUROPEAN PATENT SPECIFICATION**

(45) Date of publication and mention
of the grant of the patent:
**11.02.2026 Bulletin 2026/07**

(21) Application number: **22202079.4**

(22) Date of filing: **18.10.2022**

(51) International Patent Classification (IPC):
**B60C 23/04** (2006.01)

(52) Cooperative Patent Classification (CPC):
**B60C 23/0408; B60C 23/0488;** B60W 2040/1307

(54) **TIRE LOAD MONITORING**

REIFENLASTÜBERWACHUNG

SURVEILLANCE DE CHARGE DE PNEU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**24.04.2024 Bulletin 2024/17**

(73) Proprietor: **Bridgestone Europe NV/SA
1930 Zaventem (BE)**

(72) Inventors:
• **Benedetti, Roberto
00128 Roma (IT)**
• **Bortolotto, Valerio
00128 Roma (IT)**
• **Testi, Giulio
00128 Roma (IT)**
• **Poggi, Marco
00128 Roma (IT)**
• **Alleva, Lorenzo
00128 Rome (IT)**

(74) Representative: **Marchetti, Alessio
Bridgestone Europe NV/SA - Italian Branch
Technical Center
Via del Fosso del Salceto, 13/15
00128 Roma (IT)**

(56) References cited:
EP-A1- 3 715 151        EP-A1- 4 060 307
US-A1- 2018 096 542     US-A1- 2021 300 131

## Description

Technical Field

The present invention relates to a method of monitoring a current load on a tire mounted on a vehicle. The invention further relates to a system for monitoring a current load on a tire.

Background

Tire overloading can lead to potential failures with risk of accidents, while loading with incorrect inflation pressure can increase tire strain, reducing casing durability and causing irregular wear. Vehicle overloading can also result in driving instability and law infringement.

A sensor mounted inside a tire is generally referred to as a Tire Monitoring System (TMS) sensor. TMS sensors are used to monitor some parameters of the tire itself, such as the inflation pressure, internal air temperature, tire revolution time, etc., as well as to extract information on the interaction of the tire with its surrounding environment, such as the road or the vehicle.

Current methods of monitoring tire load use telematics information such as vehicle speed, accelerations, engine RPM, engine load, and shock absorber data. Such methods can be inaccurate and require a significant amount of data to be collected, meaning that an accurate load estimation calculation can take a significant amount of time.

It is known to use an acceleration sensor arranged in a tire to measure the amount of deflection when the tire makes contact with the ground (the so-called 'contact patch').

There remains a need for quick and reliable load assessment that can be used to monitor tire usage.

EP 4060307 A1 discloses a method including determining a tire load parameter for a tire based in part on a tire deformation parameter generated by a tire mounted sensor (TMS).

EP 3715151 A1 discloses a pneumatic tire and further relates to a monitoring method and a system.

Summary of the Invention

According to a first aspect of the invention, there is provided a computer-implemented method of monitoring a current load on a tire mounted on a vehicle, the method comprising:

obtaining (e.g. by a server device) sensor readings from one or more tire monitoring system (TMS) sensors mounted on the tire;
accessing (e.g. by the server device) characteristic information relating to the tire;
selecting (e.g. by the server device), based on the characteristic information, a suitable computer model from a plurality of computer models, wherein the suitable model is a computer model that is tailored to the characteristic information; and
using (e.g. by the server device) the tailored computer model that has been selected to estimate a current tire load value based on the sensor readings.

It will be understood that the term "current" as used herein means real-time, or approximately real-time, such that monitoring a current load means that the load is estimated in real-time, or with a slight delay. Similarly, current sensor readings are sensor readings which have been obtained at or close to the time at which the load estimation is performed.

It will be appreciated by the person skilled in the art that by selecting a suitable tailored model based on the characteristic information, the current sensor readings can be more effectively used to estimate the current tire load. Because a plurality of different models are provided, and a suitable model is selected based on the tire characteristic information, the models themselves do not have to account for the tire characteristic information as a variable. As such, the selected model can be simpler and hence less computationally demanding. This has the additional advantages that the model can be run on devices having less processing power, and/or, the model can be run more quickly. Clearly, estimating current tire load quickly is important, especially if a tire is overloaded, since this could lead to a dangerous tire failure. Further, the reduction in variables within each model leads to a more accurate estimation of the current tire load.

In some embodiments, the characteristic information relating to the tire comprises one of more of: the tire manufacturer, tread pattern, tire specification, tire compound, tire stiffness, tire size, tire mounting position, and retread information. In some preferred embodiments, the plurality of models includes a separate model specifically optimised for a known tire product from a given manufacturer. By providing a separate model for a specific tire product, the complexity of each model is significantly reduced, and hence the model can be used to calculate current tire load more quickly and accurately whilst being less computationally demanding.

In some embodiments, the method comprises accessing characteristic information relating to the vehicle. Where characteristic information related to the vehicle is accessed, a suitable one of the plurality of models may be selected based on both the characteristic information relating to the tire, and the characteristic information relating to the vehicle.

In some embodiments, the characteristic information relating to the vehicle comprises one or more of: vehicle manufacturer, a chassis type for the vehicle, vehicle usage, number of axles, product types, number of tires, number of tires mounted per axle.

Such vehicle characteristic information may contribute to the accuracy of load estimation. Vehicle usage may be defined as a road type driving profile which may comprise any information which can be derived from the amount of driving performed on each road type. For example, the road type driving profile may comprise a breakdown of each road type and the distance driven on each road type. It may also optionally include the average time driven on each road type for a specific vehicle, or vehicle type. Further, it may optionally include the proportion, based on distance and/or time, driven on each road type. For example, it may be known that 60% of a vehicles total distance is driven on highways, 20% is driven on extra-urban roads, and 10% is performed on urban roads.

Product types may be defined as specific vehicle products from a given manufacturer.

In some embodiments, the plurality of models includes a separate model specifically optimised for a known tire product from a given manufacturer, fitted on a known vehicle product from a given manufacturer.

In some embodiments, each of the plurality of models is a fitting algorithm developed by studying the correlation among each parameter from the sensor readings and the tire load for tires (and optionally also vehicles) with certain characteristic information.

In some embodiments, the method comprises obtaining current telematics information from the vehicle. In such embodiments, the telematics information may comprise one or more of, GPS location, vehicle speed, vehicle lateral/longitudinal acceleration, type of road, engine load, gear shifts, engine RPM, wheel speed, throttle/brake pedal position, tire temperature, external temperature, and/or steering wheel angle.

In some embodiments, the method comprises using the current telematics information to detect favourable load measuring conditions, and obtaining the TMS sensor readings when favourable load measuring conditions are detected. It may be that one or more of engine load information, throttle input, braking input, steering input, lateral vehicle acceleration and longitudinal vehicle acceleration are used to detect favourable load measuring conditions. The load on a tire will change as a result of the vehicle's dynamic movements, for example, front tire load will increase under braking. By detecting favourable load measuring conditions, the likelihood of anomalous load estimation can be reduced.

In some embodiments the sensor readings comprise one or more of: radial acceleration values, inflation pressure, and internal air temperature. For example, the one or more tire monitoring system (TMS) sensors mounted on the tire may include an acceleration sensor and/or pressure sensor and/or temperature sensor.

It has now been appreciated that radial acceleration values can be particularly useful for load estimation, as they provide an accurate measurement of the tire rolling dynamics. This approach can be used in addition to the more traditional sensor readings of pressure and/or temperature, or separately. Thus, in some embodiments the method further comprises: obtaining sensor readings including radial acceleration values; analysing the radial acceleration values to calculate one or more tire parameters chosen from: tire contact patch length, tire wear estimation, tire revolution time ($t\_rev$), mounting position auto location, and tire mileage estimation; and using the selected model to estimate a current tire load value based on the sensor readings and one or more of the tire parameters. The tire contact patch length may be defined as the total amount of time a single part of the tire remains in the contact patch ($t\_patch$), or may be defined as the contact patch ratio which is the ratio between the total amount of time a single part of the tire remains in the contact patch ($t\_patch$) and the total tire revolution time ($t\_rev$). The mounting position auto location may be defined as locating the tire's position on the axle/chassis (e.g. left side, front axle).

In some embodiments, the method comprises providing feedback to a user related to the current tire load value. In some embodiments the feedback is provided in real-time.

In some embodiments, the feedback comprises one or more of: a notification that a tire loading index is exceeded, a notification that the tire is running at an incorrect inflation pressure for the current load, a notification that the vehicle is exceeding a maximum load capability, and a notification that the vehicle has an unbalanced weight distribution across its tires. Early notification of a loading issue can allow the user, who may be a driver or a fleet manager, to take action to rectify the issue, reducing the likelihood of a failure, such as a tire blowout.

In some embodiments, the model is used to detect the current tire load based on the sensor readings and the telematics information. Leveraging both TMS sensor readings and telematics information increases the amount of data input into the model which may lead to more accurate load estimation.

In some preferred embodiments, the sensor readings comprise inflation pressure and radial acceleration values, wherein the radial acceleration values are analysed (e.g. by the TMS sensor) to provide information relating to the tire contact patch length and tire revolution time ($t\_rev$), and wherein the characteristic information relating to the tire comprises tire compound or tire stiffness, and tire size. While the radial acceleration and inflation pressure are raw sensor readings, the footprint length and tire revolution time ($t\_rev$) can be calculated using the raw values measured for radial acceleration. In embodiments, revolution time may be directly measured. In embodiments, the revolution time (t_rev) (whether measured directly, or calculated using radial acceleration values) can be used to calculate the tangential speed of the tire, using the tire radius. The inflation pressure may be a non-normalized pressure reading or a normalized pressure reading, where the normalized pressure reading is the internal air pressure divided by the internal temperature.

In embodiments, the method comprises estimating the tire contact patch length, and tire revolution time (t_rev) by assessing peaks appearing in the waveform obtained by differentiating the time series waveform of the tire radial acceleration detected by an acceleration sensor mounted on the tire. Such a technique is known from WO2020071249A1.

In some embodiments, tangential tire speed $v$ is calculated using the radial acceleration values according to

$$v = \sqrt{\frac{a}{r}}$$ where a is the radial acceleration and r is the tire radius.

In other embodiments, tangential tire speed $v$ is calculated using the tire revolution time (t_rev) according to

$$v = \frac{2\pi r}{t\_rev}$$ where r is the tire radius and t_rev is the tire revolution time. In other embodiments, the sensor readings may comprise a reading from a wheel speed sensor. This means that the wheel speed (and hence tangential tire speed) may be measured directly.

In some embodiments, the characteristic information relating to the tires comprises tire compound or tire stiffness, and tire size.

In some embodiments, the method comprises suggesting an action to the user, optionally wherein the action is a load rebalancing and/or a pressure regulation.

In some embodiments, the current load tire value is calculated only once in a trip undertaken by the vehicle. The load on a tire is unlikely to change significantly during a trip since the vehicle is unlikely to be loaded or unloaded whilst moving. By reducing load estimations to once per trip, energy can be conserved, which is particularly advantageous when using battery powered TMS sensors.

In some embodiments, the method comprises detecting the start of a trip using TMS data from the one or more tire monitoring system (TMS) sensors and/or telematics data and estimating the current tire load value in response to the detection of the start of a trip.

In some embodiments, a trip start is detected by determining that a non-zero radial acceleration reading is present in the TMS data after a period of inactivity.

In embodiments, the length of the time period of inactivity is compared to a threshold, and if the time exceeds the threshold, then a new trip start is determined.

By comparing the time period to a threshold, the likelihood of a false trip start detection, for example after a vehicle sets off after being stationary briefly at a set of lights.

In a preferred set of embodiments, a time history set of GPS locations of the vehicle is collected from the telematics data, and a trip start is determined based on the GPS location changing after a stationary period. In embodiments, the time for which the vehicle was stationary is compared to a threshold, and if the time exceeds the threshold, then a new trip start is determined.

By comparing the time for which the vehicle was stationary to a threshold, the likelihood of a false trip start detection, for example after a vehicle sets off after being stationary briefly at a set of lights.

In other embodiments, the start of a trip may be detected by identifying an "ignition on" signal from the telematics data.

In embodiments, after a trip start is detected, the method comprises acquiring data for a pre-determined number of tire revolutions, periodically, for a fixed period of time after the trip start detection. The data acquisition may start as soon as the trip start is detected, or soon after the trip start is detected, for example, as soon as optimal load estimating conditions are detected after a trip art detection.

In some embodiments, the current load tire value is calculated at fixed time intervals or at fixed travel distance intervals. This may reduce energy consumption by reducing the number of load estimations which are performed. The method described herein may therefore be repeated at fixed time intervals or at fixed travel distance intervals.

In some embodiments, the method comprises storing the estimated current tire load value. The estimated current tire load value may be stored on the server, or on a user output device, or on another device.

In some embodiments, the method comprises collecting the estimated current tire load values, for a given tire, across a time period (e.g. lifetime of tire mounted on a particular vehicle).

In some embodiments, the method comprises outputting tire usage data that indicates the current load on a tire as a function of time across the time period. Such an output may allow a user, such as a fleet manager or tire manufacturer, to see if a tire was routinely overloaded, and hence understand what effect this had on the lifespan of the tire.

In some embodiments, each of the plurality of models is pre-trained on historical data acquired for a tire and/or vehicle having the characteristic information. This means that each model has been optimised to correlate (e.g. linearly and/or nonlinearly) the characteristic information with observed measurements of tire load. Such modelling may be based, for example, on linear regression, random forest, supporting vector regressor, neural network, or any combination thereof.

According to a second aspect of the invention, there is provided a computer-implemented method of monitoring a current load on a vehicle by:

applying the method described herein (according to any embodiment of the first aspect) to each tire mounted on the vehicle;
accessing information (e.g. vehicle characteristic information) relating to the arrangement of the tires on each axle of the vehicle; and
calculating a total vehicle load or load per axle.

It will be appreciated that this aspect may (and preferably does) include one or more (e.g. all) of the preferred and optional features disclosed herein, e.g. relating to other aspects and embodiments of the invention, as applicable.
According to a third aspect of the invention, there is provided a system for monitoring a current load on a tire configured to perform the method according to the first aspect, the system comprising:

one or more TMS sensors mounted on a tire and configured to obtain the sensor readings;
a processor configured to process the sensor readings; and
a memory configured to store the sensor readings and/or parameters based on the sensor readings.

It will be appreciated that this aspect may (and preferably does) include one or more (e.g. all) of the preferred and optional features disclosed herein, e.g. relating to other aspects and embodiments of the invention, as applicable.
In some embodiments, the processor is embodied as a tire-mounted processor, for example in the same tire-mounted device as the one or more TMS sensors. In some embodiments, the processor is comprised in a receiver of the sensor readings, for example a receiver mounted in the vehicle, such as a suitable network communication device (e.g. dongle). In some embodiments, the processor is embodied as a server that is remote from the vehicle, e.g. a cloud server. In some embodiments, the sensor readings are processed (e.g. analysed) by one or more of these processors.
In some embodiments, the system comprises one or more user output devices for displaying estimated tire load values, and/or notifications and/or suggested actions to a user. The description above applies equally to such a system.
In some embodiments, at least one of the tire monitoring system (TMS) sensors mounted on the tire is an acceleration sensor, preferably a radial acceleration sensor. The sensor readings may include radial acceleration readings (e.g. waveforms) as radial acceleration values.
In some embodiments, at least one of the tire monitoring system (TMS) sensors mounted on the tire is an air pressure sensor, preferably mounted inside the tire to measure the internal air pressure.
In some embodiments, at least one of the tire monitoring system (TMS) sensors mounted on the tire is an air temperature sensor, preferably mounted inside the tire to measure the internal air temperature.
In some embodiments, each sensor (or a collection of the sensors) is provided on an inner surface of the tire, e.g. attached to the surface of an inner liner facing the tread portion or provided on the inner surface of the tire on the sidewall side. However, the sensor does not necessarily have to be attached to an inner surface of the tire, and for example, a part or all of the sensor may be embedded inside the tire.
In at least some embodiments, the one or more tire monitoring system (TMS) sensors mounted on the tire include a transmitter for transmitting the sensor readings, optionally a processor configured to pre-process the sensor readings, and a battery for supplying power to the transmitter at regular detection intervals (for example, 10 s, 30 s, 60 s, etc.).
It will of course be appreciated that the term 'server' as used herein means a computer or machine (e.g. server device) connected to a network such that the server sends and/or receives data from other devices (e.g. computers or other machines) on that network. Additionally, or alternatively, the server may provide resources and/or services to other devices on the network. The network may be the Internet or some other suitable network. The server may be embodied within any suitable server type or server device, e.g. a file server, application server, communications server, computing server, web server, proxy server, etc. The server may be a single computing device, or may be a distributed system, i.e. the server functionality may be divided across a plurality of computing devices. For example, the server may be a cloud-based server, i.e. its functions may be split across many computers 'on demand'. In such arrangements, server resources may be acquired from one or more data centres, which may be located at different physical locations.
It will thus be appreciated that the processes described above which are carried out by the server, may be carried out by a single computing device, i.e. a single server, or by multiple separate computing devices, i.e. multiple servers. For example, all of the processes may be carried out by a single server which has access to all the relevant information needed.

Brief description of the drawings

One or more non-limiting examples will now be described, by way of example only, and with reference to the accompanying figures in which:

Figure 1 shows a schematic view of a load monitoring system installed on a heavy goods vehicle;
Figure 2 is a schematic diagram of a load monitoring system;
Figure 3 is a flow diagram illustrating a load monitoring method;
Figure 4 is a 3D plot showing the correlation between pressure, load, and contact patch;
Figure 5 is a flow diagram illustrating a part of the method of Figure 3 in greater detail;
Figure 6 is a flow diagram illustrating an alternative method to that shown in Figure 5;
Figure 7 shows a scatter plot of predicted load (using a model according to an embodiment of the invention) against true load;
Figure 8 is a histogram showing the distribution of the variable "true load - predicted load";
Figure 9 shows an output provided to a user.

Detailed Description

In the figures, it will be understood that features and method steps shown with dashed lines are optional, and may freely be omitted in embodiments of the invention.

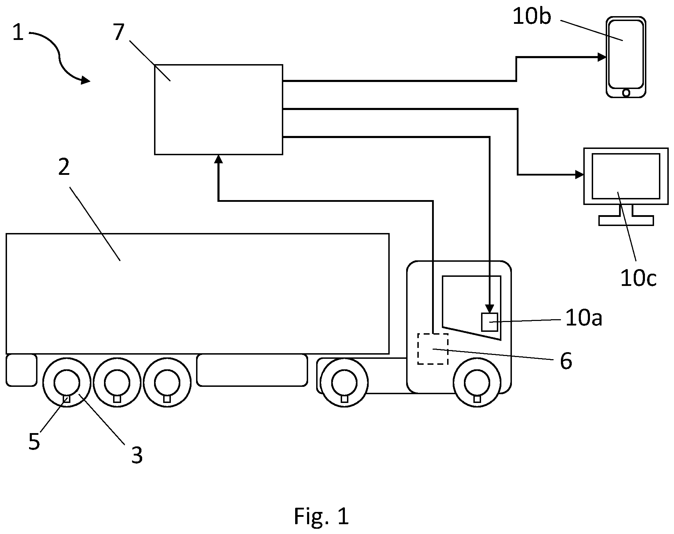

Figure 1 shows a system 1 for monitoring the load on a plurality of vehicle tires 3 mounted on a vehicle 2. The system 1 comprises a plurality of tire monitoring system (TMS) sensors 5, each mounted within a tire 3, and a network communication device 6 provided in the vehicle 2. In embodiments, the network communication device 6 may be a dongle which is plugged into a port of the vehicle 2 such as an OBD port, FMS port, or other. In alterative embodiments, the network communication device 6 may be a permanently installed transceiver box. The TMS sensors 5 are configured to communicate with a remote server 7, via the network communication device 6 in the vehicle 2. The remote server 7 may comprise an online database/cloud/platform. In this example the TMS sensors 5 communicate with the network communication device 6 via a Bluetooth® connection, but it will be understood that any suitable form of short-range wireless communication, or a wired connection, may be used. The network communication device 6 is networked and communicates via a wireless network connection (e.g. cellular network) to a remote server 7. The remote server 7 is connected, via the wireless network, to a user output device 10. In the illustrated embodiment, a plurality of user output devices 10 are provided: a user terminal 10a provided inside the cabin of the vehicle 2, a user mobile device 10b which may be carried by a user, and a fleet manager's computer 10c.

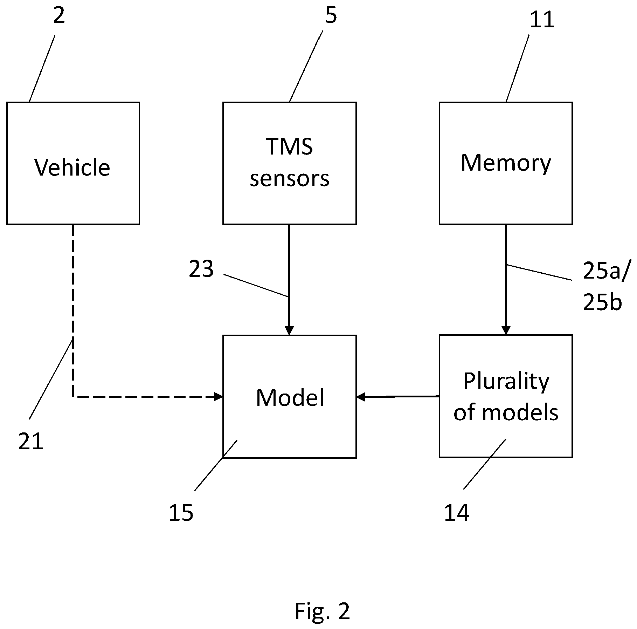

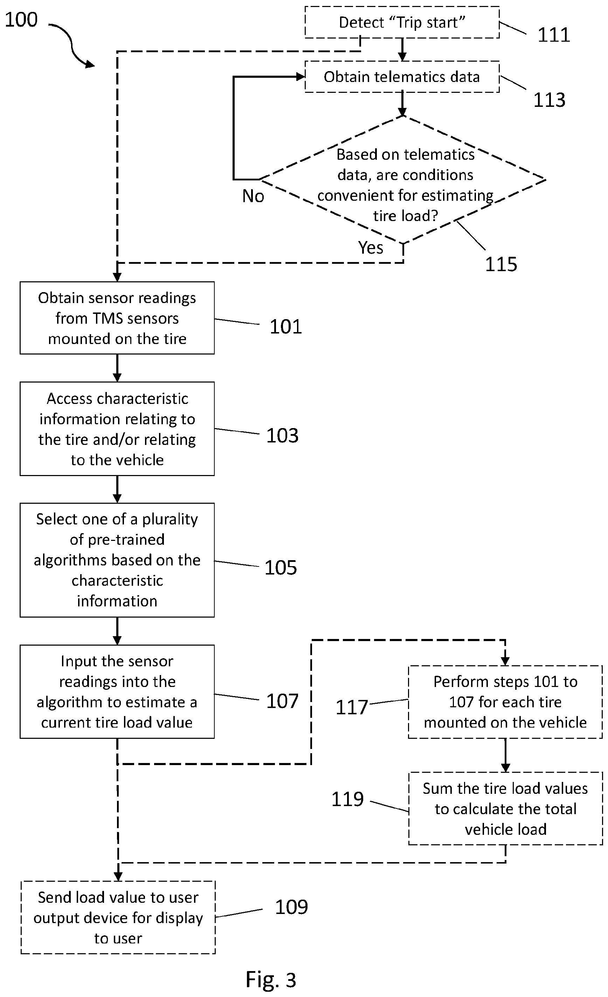

Figure 2 is a schematic diagram showing the inputs into the model 15 which is implemented by the remote server 7. Firstly, characteristic information 25 comprising characteristic information relating to the tires 25a and optionally characteristic information relating to the vehicle 25b is received from a memory 11. In embodiments, the memory 11 may be implemented at the remote server 7 itself. Alternatively, the memory may be contained in the TMS sensor 5, the network communication device 6, or a further server (not shown) which is operably connected to the remote server 7. The characteristic information 25a is used to select a model 15 from a plurality of models 14 since the models are built and trained to be used with specific tire products. This is explained later in relation to Figure 3. The selected model 15 then receives input data. TMS information 23 is acquired from the plurality of TMS sensors 5 mounted in the tires 3 of the vehicle 2 and is input into the selected model 15. In this embodiment, telematics information 21 is received from the vehicle 2 and, optionally, is also input into the selected model 15, as shown by the dashed arrow in Figure 2. The input of telematics information 21 and TMS information 23 into the selected model 15 may increase the accuracy of the model 15. This telematics information 21 can be acquired by sensors on the vehicle 2 in any known way.

The operation of the system 1 will now be explained with reference to the flow chart of Figure 3 showing the load monitoring method 100.

Steps 101 to 107 outline the process for monitoring the load on a single tire 3 on the vehicle 2. At step 101 sensor readings are obtained from the TMS sensor 5 mounted on the tire. Each sensor 5 acquires data for n tire revolutions, every m seconds at each trip start for a number of minutes. In embodiments, each sensor 5 may acquire data for 10 tire revolutions every 15 seconds for 5 minutes after the trip start. The sensor readings 23 include radial acceleration, inflation pressure, contact patch length estimation, and tire revolution time (t_rev)/tangential tire speed. Radial acceleration readings take two forms. First, the raw radial acceleration readings. These are used to generate a waveform (acceleration plotted over time) from which the contact patch length can be estimated. Second, an average radial acceleration is calculated which takes into account only acceleration readings which are taken outside of the contact patch. This average radial acceleration can be used to estimate the tangential tire speed. Although these estimations are not directly measured, the estimation calculations are performed by a processor in the TMS sensor 5 itself, as is known, and so are still considered sensor readings received from the TMS sensor. The contact patch length is estimated by assessing peaks appearing in the waveform obtained by differentiating the time series waveform of the tire radial acceleration detected by the acceleration sensor mounted on the tire. Such a technique is known from WO2020071249A1. The tire contact patch length is then estimated as the ratio between the contact patch time and the revolution time. Meanwhile, tangential tire speed may be calculated according to equation 1

$$v = \sqrt{\frac{a}{r}} \qquad\qquad\qquad \textit{Equation 1}$$

Where v is the tangential tire speed, a is the average radial acceleration outside of the contact patch, and $r$ is the radius of the tire. In other embodiments, tangential tire speed v is calculated using the tire revolution time according to $v = \frac{2\pi r}{t\_rev}$ where r is the tire radius and t_rev is the tire revolution time. The processing steps to estimate the contact patch length and tangential tire speed could be performed at the TMS sensor 5, or in the vehicle 2, or at the network communication device 6, or at the remote server 7. As explained in relation to Figure 1 and Figure 2, the TMS information 23 is sent to the network communication device 6 in the vehicle 2 via a short range wireless connection such as Bluetooth® and then to the remote server 7 via a network where the TMS information 23 is input into the model 15. The TMS information 23 could additionally comprise one or more of internal air temperature, wear estimation, mounting position auto location, and tire mileage estimation.

At step 103, characteristic information 25 is accessed from the memory 11. The characteristic information contains one or both of vehicle characteristic information 25b, and tire characteristic information 25a. The tire characteristic information 25a may comprise one or more of the tire manufacturer, tread pattern, specification, size, mounting position, retread information, and additional remaining tread depth (RTD) measured during tire inspections. In preferred embodiments, the tire characteristic information 25a may correspond to a specific tire product from a specific manufacturer. The vehicle characteristic information 25b may comprise one or more of the vehicle manufacturer, chassis (number of tires/axles), vehicle usage, and tractor load.

At step 105, one of a plurality of pre-trained models 14 is selected based on the characteristic information 25. The model 15 comprises algorithms which have been pre-trained on historical data. This historical data comprises data from three sources:

- Indoor testing rigs

    o Drums or similar devices capable of simulating tire behaviors at different speeds, pressures, and loading conditions

- Outdoor testing

    o Testing vehicles in a controlled environment such as a proving ground or public roads, running on specific tire conditions and vehicle conditions.
    ◦ Variations in load can be applied during outdoor testing by vehicle weighting, or by using purpose built vehicles which are capable of applying variable tire loads/forces.

- Testing fleets

    o Vehicles on public roads in uncontrolled conditions where vehicle/tire conditions may not be known or may only partially be known.

Since the vehicle and tire characteristic information 25b, 25a can have a significant effect on the monitoring of a tire load, separate models are provided for different vehicle and/or tire characteristics. This is because a model capable of dealing with all vehicle and tire characteristics would likely be restrictively computationally demanding. In a preferred embodiment, a separate model 15 is built for each tire product based on the characteristic information 25a relating to that tire. These models 15 are vehicle independent, and so will work with any vehicle on which the tire product can be mounted. This increases the model accuracy and reduces the complexity of the model 15, such that, although the building of many separate models may be more demanding than building a single model, the simple models are more suitable for implementation on devices with limited processing power, such as a TMS sensor device 5, or a network communication device 6 inside a vehicle 2. In a preferred embodiment, the tire compound and stiffness, and tire size, both of which vary between tire products are used as the tire characteristic information 25a on which the model selection is based.

At step 107, the TMS information 23 is input into the selected model 15. The model 15 correlates the input TMS information with the characteristic information to determine the load on the tire 3. This correlation may be linear or non-linear. The algorithms used to create the model 15 are linear regression, random forest, supporting vector regressor, neural network or an ensemble of all the above or an ensemble of a subset of the above. During the training phase of the model 15, the historical data is analysed to study the correlation among each parameter from the TMS data 23 and the tire load for each specific tire product. From this correlation, a fitting model 15 can be created for that specific tire product.

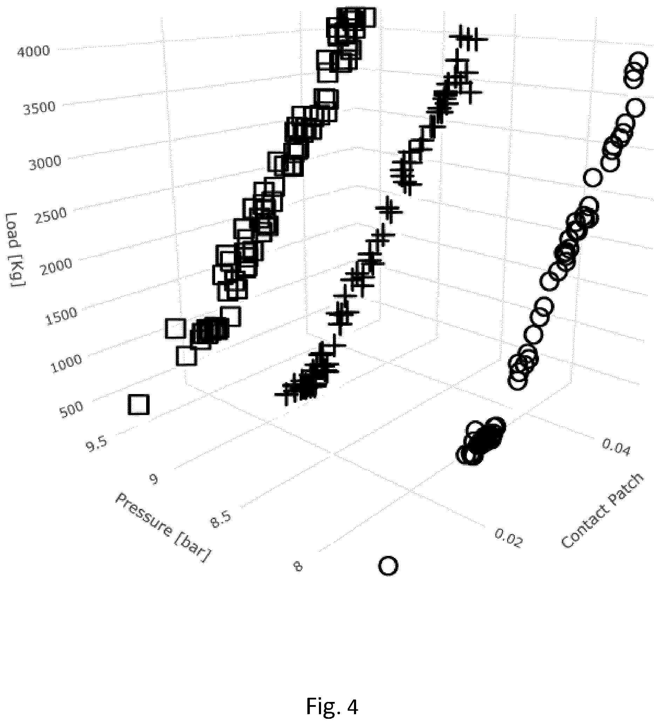

Figure 4 shows a 3D scatter plot created using historical (training) data. The plot shows load plotted against pressure and contact patch ratio. This particular training data includes measurements taken at three distinct pressures, hence the three distinct lines in the data. It can clearly be seen however, that there is a correlation between these three variables, and hence, a plane of best fit can be generated, based on the plotted training data, using any known correlation algorithm. This best-fit plane represents the model 15 which can then be used to estimate the load if the contact patch and the pressure are known.

The model 15 is optimized using a cross validation procedure with multiple folds. The historical data is divided into multiple sub-datasets (folds) and different combinations of model variations and historical data are sequentially tested to address which model variation is best for solving the problem. The model 15 is therefore optimized around the best model variation.

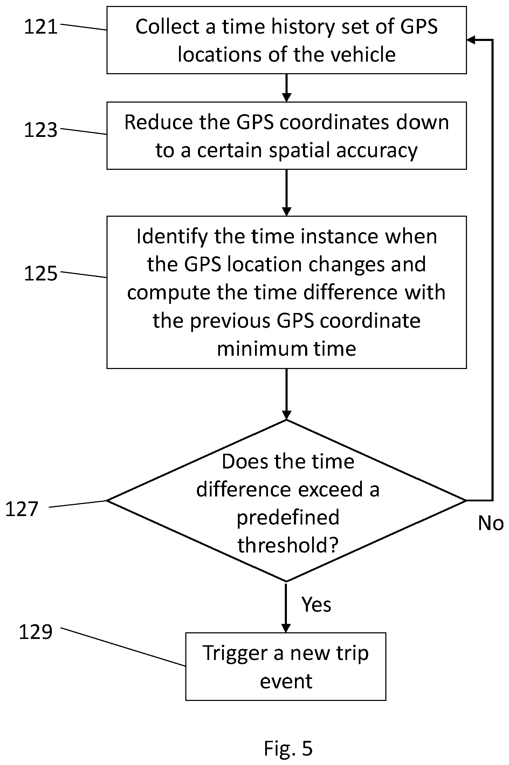

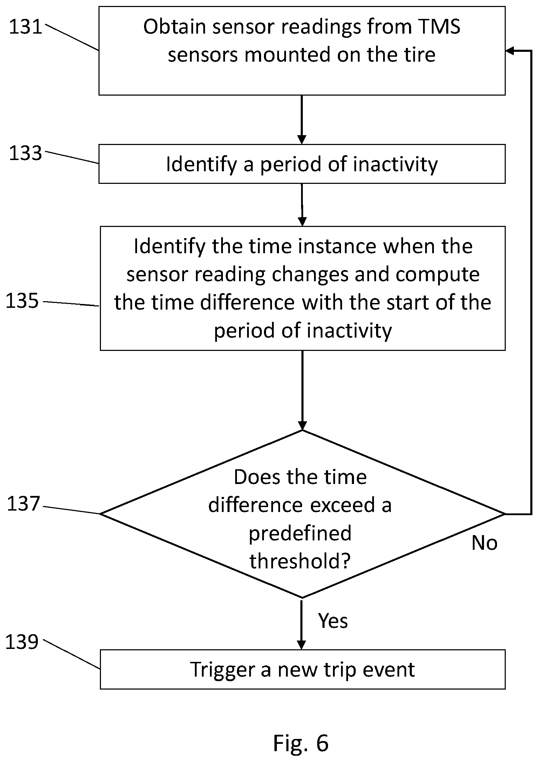

Steps 101 to 107 of Figure 3 relate to the load estimation itself, but Figure 3 also contains other steps relating to the assessment of when to perform the load estimation. At step 111, a "trip start" is detected. Methods for detecting a trip start are discussed in more detail in relation to Figure 5 and Figure 6. The purpose of the present invention is to monitor the current tire load, and also to provide feedback to the user about the current tire/vehicle loading conditions. However, since most TMS sensors are battery operated, it is advantageous to minimize the number of TMS transmissions in order to reduce data costs and maximize the TMS sensors' battery life. A possible solution to achieve these two objectives is to reduce the number of load detection computations up to once per vehicle trip in order to detect possible weight changes. This solution operates on the assumption that the load is unlikely to change during a trip since the most likely cause of a load change is the addition, removal, or movement of cargo, for which the vehicle 2 would need to stop. By implementing a trip start detection procedure at step 111, the start of a new trip can be detected. Since a new trip has begun, the loading conditions may have changed between trips and so in response to a trip start detection, an updated tire load needs to be detected. As shown in Figure 3, once a trip start has been detected, the method 100 can proceed directly to step 101 in order to begin the load estimation, however, alternatively, the method 100 can proceed to step 113, as explained below.

In embodiments, the number of TMS transmissions can be controlled by performing data measurements during trips at fixed time/distance intervals. Such embodiments may be implemented separately, or in combination with the detection of a trip start.

The load on a vehicle tire 3 is affected by changing dynamic conditions during a journey due to weight transfer. For example, when the vehicle 2 is braking, the tires 3 at the front of the vehicle 2 experience an increased load while the tires 3 at the rear of the vehicle 2 experience a reduced load. Analogously, when the vehicle 2 is accelerating, the tires 3 at the rear of the vehicle 2 experience an increased load while the tires 3 at the front of the vehicle 2 experience a reduced load. The same is true of lateral accelerations. When the vehicle 2 is turning, the tires 3 on the outside of the turn will experience a greater load than the tires 3 on the inside of the turn. Clearly, a load which is calculated based on TMS sensor readings taken during such a load transfer event will not have a high degree of accuracy and so in order to increase the accuracy of the load monitoring method 100, it is advantageous to detect favourable conditions for load monitoring assessment. This can be done by obtaining telematics data at step 113 and, at step 115, analysing the telematics data to determine whether the current dynamic conditions are favourable for load monitoring assessment.

The telematics data 21 is obtained by sensors in the vehicle 2, and is collected by the network communication device 6 which is connected to an OBD, FMS, or similar port of the vehicle 2. In the illustrated embodiment, a single network communication device 6 is provided which communicates with all of the TMS sensors 5, but it will be understood that a plurality of network communication devices 6 could be present. For example, multiple network communication devices 6 may be necessary in a large vehicle where the range of the wireless signal from the TMS sensors 5 is not sufficient for all TMS sensors 5 to be in range of a single network communication device 6. The telematics information 21 can comprise one or more of, accelerations, speed, GPS coordinates, type of road, engine load, gear shifts, engine RPM, wheel speed, throttle/brake, pedal position, tire temperature, external temperature, and steering wheel angle.

For example, the vehicle longitudinal and lateral acceleration may each be compared to a threshold value, and if the vehicle accelerations are below that value, then it is determined that the conditions are favourable for load monitoring assessment. The best dynamic conditions for load monitoring assessment may be present when the vehicle is stationary, or is travelling in a straight line at a constant speed, such as on a motorway. At step 115, if it is determined that the conditions are favourable for load monitoring estimation, then the method 100 proceeds to step 101. If the conditions are not favourable, then the method 100 returns to step 113 and updated telematics data 21 is obtained.

In the illustrated embodiment, the network communication device 6 streams the telematics data 21 to the remote server 7.

It will be understood that steps 111,113 and 115 are not inextricably linked, and that a method according to the present invention may detect a trip start without analyzing the dynamic conditions, and equally may analyse the dynamic conditions without first detecting a trip start.

In embodiments, the dynamic conditions may be assessed in other ways which do not require the use of telematics data 21. For example, in embodiments, the TMS information 23 may be used to determine favourable conditions. In such embodiments, a relatively constant value in the radial wheel acceleration readings may be indicative of constant speed and hence favourable conditions. Alternatively, multiple load monitoring estimations may be performed and subsequently analysed. High variation in estimated loads over a brief period of time may indicate that the conditions were not favourable and so such results should be disregarded.

The method 100 described in relation to steps 101 to 103 estimates the current load on a single tire. In embodiments, it may be useful for the load on the entire vehicle to be calculated, since vehicle overloading can result in driving instability and/or law infringement.

At step 117, the steps 101 to 107 are repeated for each tire on the vehicle 2 to obtain a current load estimation value for each tire 3. Although Figure 3 is formatted as a flow diagram, it will be understood that steps 101 to 107 will be performed for each tire 3 simultaneously. Since the load value is intended to indicate the current load, the load value assessment for each tire 3 should be temporally aligned. Each tire 3 will be equipped with at least one TMS sensor 5. Each TMS sensor 5 will communicate with the same network communication device 6.

At step 119, the current total vehicle load is calculated simply by summing the individual tire load values for each tire 3 on the vehicle 2. In order to perform this sum, it is necessary to know the vehicle configuration, specifically the number of axles and the number of tires 3. If the number of tires 3 per axle is known then the load per axle can also be calculated in the same way, in line with equation 2.

$$TotalLoad \ = \ \sum_{i}^{N} w_i \qquad\qquad Equation\ 2$$

Where $w_i$ is the individual tire load and N is the number of tires on the axle or on the vehicle, depending on whether it is the total axle load or the total vehicle load being calculated.

The vehicle configuration is contained in the vehicle characteristic information 25b, which is obtained from the memory 11 as explained in relation to Figure 2.

At step 109, the load value is sent to the output device 10 for display to a user. As discussed in relation to Figure 1, the output device 10 may be a user terminal 10a inside the vehicle, a user's mobile device 10b, and/or a fleet manager's computer 10c. Since the method 100 of the invention is designed to monitor the current tire load, it is advantageous that the feedback is provided in real time. In more simple embodiments, only the raw load value (tire load value or total vehicle load value or both) may be displayed to the user, however, in embodiments, the load values may be analysed and specific warnings may be provided to the user. For example, the user may be notified when the tire loading index is exceeded, or the tire is running at an incorrect inflation pressure for the current load, or the vehicle is exceeding the maximum load capability, or the vehicle is featuring an unbalanced weight distribution (left/right and/or among vehicle axles). This analysis may be performed in the TMS sensor 5, the vehicle 2, the network communication device 6, the remote server 7, or the output device 10. Specifically, the analysis could be performed by an application installed on a user's mobile device 10b.

Figure 5 shows a flow diagram illustrating a method of detecting a trip start in step 111 of the method 100 of Figure 3. At step 121 a time history set of GPS locations of the vehicle 2 is collected from the telematics information 21. It will however be understood that the GPS information could come from any suitable source. The GPS information could come from a GPS sensor which is integral to the vehicle 2, or the network communication device 6 may comprise a GPS sensor or a separate GPS sensor may be provided in the vehicle 2. At step 123, the GPS coordinates number resolution is reduced to a certain spatial accuracy. This reduction may be performed by truncating, rounding, or a similar method. In embodiments, the resolution may be 100m.

At step 125, the time instance at which the GPS location changes is identified, and the time difference between that time instance and the minimum time of the previous GPS coordinate is computed. It will be understood that the minimum time of the previous GPS coordinate is the first time at which that GPS coordinate was recorded, and so the time difference between the first instance at which a GPS coordinate was recorded, and the instance at which the GPS coordinate changes is equal to the amount of time that the vehicle 2 was stationary. At step 127, the time difference, i.e. the time for which the vehicle 2 was stationary, is compared to a predetermined threshold, and if the time does exceed the threshold, a new trip event is triggered at step 139. If the time is below the threshold, then the method is restarted.

The threshold is set as a compromise between the need to reduce the likelihood of new trip events being falsely triggered, and the need to ensure that new tip events are not missed. For example, a threshold which is set too low could lead to a new trip event being triggered after the vehicle 2 has stopped at a set of lights, or in traffic. Meanwhile, the threshold must not be set too high as to potentially miss a stop long enough for the vehicle loading condition to have changed, for example, a stop at a depot where cargo has been added to the vehicle 2. In embodiments, the predefined threshold is set to 10 minutes.

In step 123 the precision of the spatial coordinates is reduced. This is to reduce the likelihood of a false trip start. For example, if a vehicle is moving around a depot the GPS coordinates will change, but a new trip has not yet started. By reducing the spatial precision of the GPS coordinates, for example to 100m, a new trip will only be triggered when the location of the vehicle has changed significantly since that significant movement is indicative of a potential new trip having begun.

Figure 6 shows a flow diagram illustrating an alternative method for detecting the start of a new trip using TMS information 23. At step 131, sensor readings are obtained from the TMS sensors 5 mounted on the tire 3. These readings may comprise radial acceleration values. At step 133, a period of inactivity is identified, this may be a period in which the radial acceleration values are equal to zero. At step 135 the time instance when the sensor reading changes is identified and the time difference with the start of the period of inactivity is computed. In the same way as discussed above in relation to the method of Figure 4, this allows the length of time for which the vehicle was stationary to be determined. At step 137, the time difference is compared to a predefined threshold and if it exceeds the threshold, a new trip event is triggered. If the difference is below the threshold then the method restarts. The threshold is set according to the same criteria discussed in relation to the method of Figure 5.

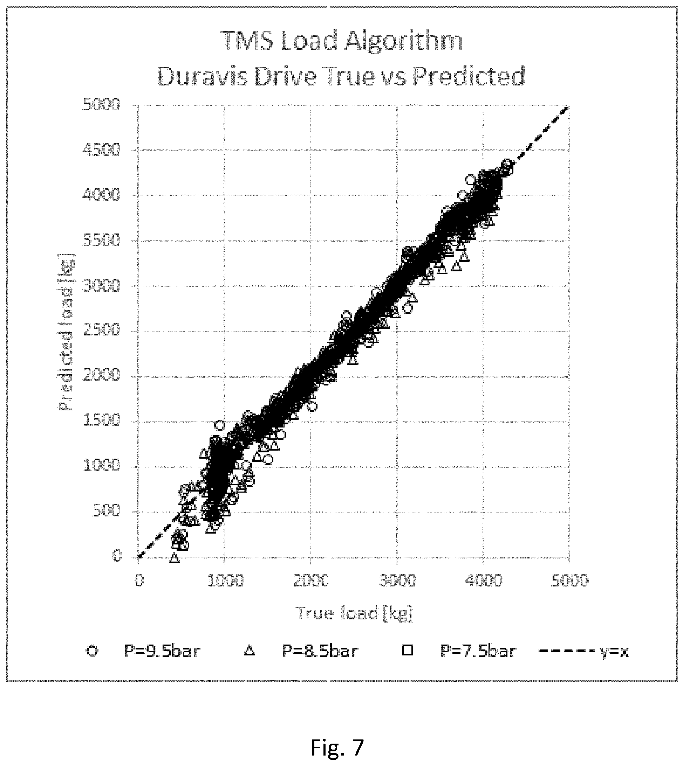

Figure 7 shows a scatter plot of true load against predicted load using a TMS load prediction algorithm in line with an embodiment of the invention. The model used was specifically optimized for the Duravis Drive tire product from Bridgestone®. As can be clearly seen from the plot, for all three of the pressures tested at, the data points lie on or close to the Y=X line, showing that the predictions made by the model are accurate.

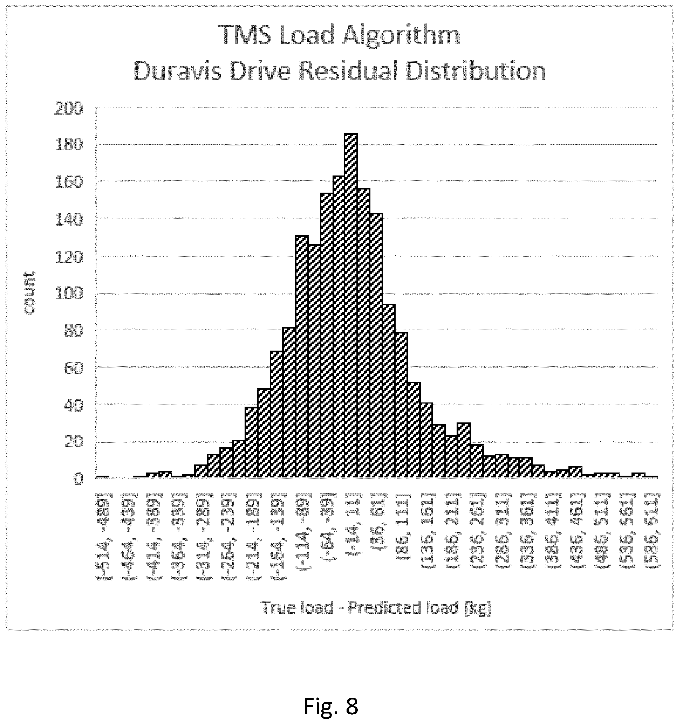

Additionally, Figure 8 shows a histogram which indicates that the distribution of the values of true load - predicted load are concentrated around the bins which correspond to low values (meaning that the true load and predicted load are similar values).

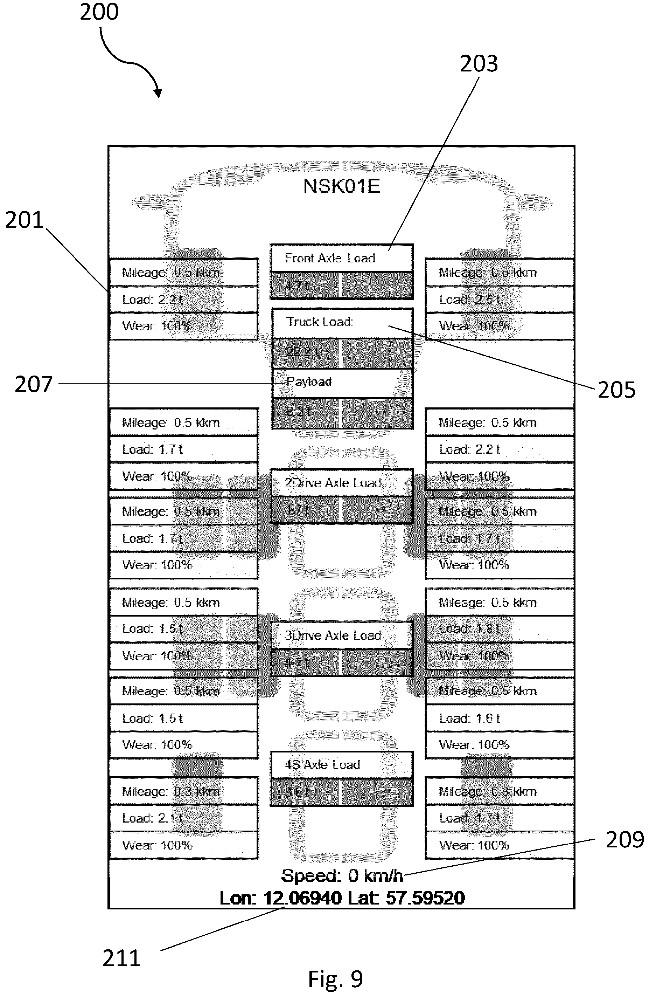

Figure 9 shows an output screen 200 which is displayed to a user on the output device 10. The individual current tire loads 201 are shown for each tire 3. The output screen 200 also displays the axle load 203 for each axle, the total vehicle load 205, and the payload 207, which is equal to the total vehicle load 205, minus the weight of the vehicle itself. In the illustrated embodiment, the output screen 200 also displays other information such as the current vehicle speed 209, and the current vehicle coordinates 211.

In the embodiments discussed, processing steps, such as the implementation of the model 15 are performed in the remote server 7. However, it is envisaged that some or all of the processing steps of the method 100 could be performed on edge, by the network communication device 6, by the vehicle 2 itself, or by the TMS sensors 5. The trip start detection 111 could equally be implemented directly on edge, on the network communication device 6, or vehicle 2, or, in embodiments not requiring telematics data, directly on TMS sensor firmware.

In the embodiments discussed above, a single current load value is calculated. It is envisaged that the method may be configured to detect multiple load values during a trip and combine these values into a moving average, a total measurement average, or combine the values using other suitable aggregating functions. Such embodiments may further increase the load detection accuracy.

**Claims**

1. A computer-implemented method (100) of monitoring a current load on a tire (3) mounted on a vehicle (2), the method (100) comprising:

   obtaining sensor readings (23) from one or more tire monitoring system (TMS) sensors (5) mounted on the tire (3);
   accessing characteristic information (25a) relating to the tire (3);

   **characterised by**:

   selecting, based on the characteristic information (25a), a suitable computer model (15) from a plurality (14) of computer models, wherein the suitable computer model (15) is a computer model that is tailored to the characteristic information (25a); and
   using the tailored computer model (15) that has been selected to estimate a current tire load value based on the sensor readings (23).

2. The method (100) of claim 1, wherein the characteristic information (25a) relating to the tire (3) comprises one of more of: the tire manufacturer, tread pattern, tire specification, tire compound, tire stiffness, tire size, tire mounting position, and retread information.

3. The method (100) of claim 1 or claim 2, wherein the plurality of models (14) includes a separate model (15) specifically optimised for a known tire product from a given manufacturer.

4. The method (100) of any preceding claim, further comprising accessing characteristic information (25b) relating to the vehicle (2).

5. The method (100) of claim 4, wherein the characteristic information (25b) relating to the vehicle (2) comprises one or more of: vehicle manufacturer, a chassis type for the vehicle, vehicle usage, number of axles, product types, number of tires, number of tires mounted per axle.

6. The method (100) of any preceding claim, comprising: obtaining current telematics information (21) from the vehicle (2), optionally wherein the telematics information (21) comprises one or more of: GPS location, vehicle speed, vehicle lateral/longitudinal acceleration, type of road, engine load, gear shifts, engine RPM, wheel speed, throttle/brake pedal position, tire temperature, external temperature, and/or steering wheel angle.

7. The method (100) of claim 6, comprising: using the current telematics information (21) to detect favourable load measuring conditions, and obtaining the sensor readings (23) when favourable load measuring conditions are detected.

8. The method (100) of any preceding claim, wherein the sensor readings (23) comprise one or more of: radial acceleration values, inflation pressure, and internal air temperature.

9. The method (100) of any preceding clam, further comprising:

   obtaining sensor readings (23) including radial acceleration values;
   analysing the radial acceleration values to calculate one or more tire parameters chosen from: tire contact patch length, tire wear estimation, tire revolution time, mounting position auto location, and tire mileage estimation; and
   using the selected model (15) to estimate a current tire load value based on the sensor readings (23) and one or more of the tire parameters.

10. The method (100) of any preceding claim, comprising: providing real-time feedback to a user related to the current tire load value, optionally wherein the feedback comprises one or more of: a notification that a tire loading index is exceeded, a notification that the tire (3) is running at an incorrect inflation pressure for the current load, a notification that the vehicle (2) is exceeding a maximum load capability, and a notification that the vehicle (2) has an unbalanced weight distribution across its tires (3).

11. The method (100) of any preceding claim, wherein the current load tire value is calculated only once in a trip undertaken by the vehicle (2).

12. The method (100) of claim 11, comprising detecting the start of a trip using data (23) from the one or more tire monitoring system (TMS) sensors (5) and/or telematics data (21) and estimating the current tire load value in response to the detection of the start of a trip.

13. The method (100) of any of claims 1 to 10, wherein the current load tire value is calculated at fixed time intervals or at fixed travel distance intervals.

14. The method (100) of any preceding claim, wherein each of the plurality of models (14) is pre-trained on historical data acquired for a tire (3) having the same characteristic information (25a).

15. A system (1) for monitoring a current load on a tire (3) and configured to perform the method (100) of any preceding claim, the system (1) comprising:

   one or more TMS sensors (5) mounted on a tire (3) and configured to obtain the sensor readings (23);
   a processor configured to process the sensor readings (23); and a memory (11) configured to store the sensor readings (23) and/or parameters based on the sensor readings (23).

**Patentansprüche**

1. Computerimplementiertes Verfahren (100) zum Überwachen einer aktuellen Last eines Reifens (3), der an einem Fahrzeug (2) montiert ist, das Verfahren (100) umfassend:

   Erhalten von Sensormesswerten (23) von einem oder mehreren Sensoren (5) eines Reifenüberwachungssystems (TMS), die an dem Reifen (3) montiert sind;

Zugreifen auf charakteristische Informationen (25a) bezüglich des Reifens (3);
**gekennzeichnet durch:**

Auswählen eines geeigneten Computermodells (15) aus einer Vielzahl (14) von Computermodellen basierend auf den charakteristischen Informationen (25a), wobei das geeignete Computermodell (15) ein Computermodell ist, das auf die charakteristischen Informationen (25a) zugeschnitten ist; und
unter Verwendung des zugeschnittenen Computermodells (15), das ausgewählt wurde, um einen aktuellen Reifenlastwert basierend auf den Sensormesswerten (23) zu schätzen.

2. Verfahren (100) nach Anspruch 1, wobei die charakteristischen Informationen (25a) bezüglich des Reifens (3) eines oder mehrere umfassen von: Reifenhersteller, Laufflächenmuster, Reifenspezifikation, Reifenmischung, Reifensteifigkeit, Reifengröße, Reifenmontageposition und Runderneuerungsinformationen.

3. Verfahren (100) nach Anspruch 1 oder 2, wobei die Vielzahl von Modellen (14) ein separates Modell (15) einschließt, das speziell für ein bekanntes Reifenprodukt eines gegebenen Herstellers optimiert ist.

4. Verfahren (100) nach einem der vorstehenden Ansprüche, ferner umfassend ein Zugreifen auf charakteristische Informationen (25b) bezüglich des Fahrzeugs (2).

5. Verfahren (100) nach Anspruch 4, wobei die charakteristischen Informationen (25b) bezüglich des Fahrzeugs (2) eines oder mehrere umfassen von: Fahrzeughersteller, einer Fahrgestellart für das Fahrzeug, Fahrzeugnutzung, Anzahl von Achsen, Produktarten, Anzahl von Reifen, Anzahl von pro Achse montierten Reifen.

6. Verfahren (100) nach einem der vorstehenden Ansprüche, umfassend: Erhalten aktueller Telematikinformationen (21) von dem Fahrzeug (2), wobei die Telematikinformationen (21) optional eines oder mehrere umfassen von: GPS-Standort, Fahrzeuggeschwindigkeit, Quer-/Längsbeschleunigung des Fahrzeugs, Straßenart, Motorlast, Gangwechsel, Motordrehzahl, Radgeschwindigkeit, Gas-/Bremspedalstellung, Reifentemperatur, Außentemperatur und/oder Lenkradwinkel.

7. Verfahren (100) nach Anspruch 6, umfassend: Verwenden der aktuellen Telematikinformationen (21), um günstige Lastmessbedingungen zu erkennen, und Erhalten der Sensormesswerte (23), wenn günstige Lastmessbedingungen erkannt werden.

8. Verfahren (100) nach einem der vorstehenden Ansprüche, wobei die Sensormesswerte (23) eines oder mehrere umfassen von: Radialbeschleunigungswerten, Reifendruck und Innenlufttemperatur.

9. Verfahren (100) nach einem der vorstehenden Ansprüche, ferner umfassend:

Erhalten von Sensormesswerten (23), einschließlich der Radialbeschleunigungswerte;
Analysieren der Radialbeschleunigungswerte, um einen oder mehrere Reifenparameter zu berechnen, die ausgewählt werden aus: Reifenaufstandsflächenlänge, Reifenverschleißschätzung, Reifenumdrehungszeit, automatische Lokalisierung der Montageposition und Reifenlaufleistungsschätzung; und Verwenden des ausgewählten Modells (15), um einen aktuellen Reifenlastwert basierend auf den Sensormesswerten (23) und einem oder mehreren der Reifenparameter zu schätzen.

10. Verfahren (100) nach einem der vorstehenden Ansprüche, umfassend: Bereitstellen einer Echtzeitrückmeldung an einen Benutzer in Bezug auf den aktuellen Reifenlastwert, wobei die Rückmeldung optional eines oder mehrere umfasst von: einer Meldung, dass ein Reifenlastindex überschritten wird, einer Meldung, dass der Reifen (3) mit einem für die aktuelle Last falschen Reifendruck betrieben wird, einer Meldung, dass das Fahrzeug (2) eine maximale Lastfähigkeit überschreitet, und einer Meldung, dass das Fahrzeug (2) eine unausgewogene Gewichtsverteilung über seine Reifen (3) aufweist.

11. Verfahren (100) nach einem der vorstehenden Ansprüche, wobei der aktuelle Reifenlastwert nur einmal pro Fahrt des Fahrzeugs (2) berechnet wird.

12. Verfahren (100) nach Anspruch 11, das das Erkennen des Beginns einer Fahrt unter Verwendung von Daten (23) von einem oder mehreren Sensoren (5) des Reifenüberwachungssystems (TMS) und/oder Telematikdaten (21) und das Schätzen des aktuellen Reifenlastwerts als Reaktion auf die Erkennung des Fahrtbeginns umfasst.

**13.** Verfahren (100) nach einem der Ansprüche 1 bis 10, wobei der aktuelle Reifenlastwert in festen Zeitintervallen oder in festen Fahrdistanzintervallen berechnet wird.

**14.** Verfahren (100) nach einem der vorstehenden Ansprüche, wobei jedes der Vielzahl von Modelle (14) anhand historischer Daten vortrainiert wird, die für einen Reifen (3) mit denselben charakteristischen Informationen (25a) erfasst werden.

**15.** System (1) zum Überwachen einer aktuellen Last eines Reifens (3), das konfiguriert ist, um das Verfahren (100) eines der vorstehenden Ansprüche auszuführen, das System (1) umfassend:

einen oder mehrere TMS-Sensoren (5), die an einem Reifen (3) montiert und konfiguriert sind, um die Sensormesswerte (23) zu erfassen;
einen Prozessor, der konfiguriert ist, um die Sensormesswerte (23) zu verarbeiten; und einen Speicher (11), der konfiguriert ist, um die Sensormesswerte (23) und/oder auf den Sensormesswerten (23) basierende Parameter zu speichern.


**Revendications**

**1.** Procédé (100) mis en œuvre par ordinateur destiné à surveiller une charge actuelle sur un pneu (3) monté sur un véhicule (2), le procédé (100) comprenant :

l'obtention de lectures de capteur (23) à partir d'un ou plusieurs capteurs (5) de système de surveillance de pneu (TMS) montés sur le pneu (3) ;
l'accès à des informations de caractéristique (25a) relatives au pneu (3) ;
**caractérisé par** :

la sélection, sur la base des informations de caractéristique (25a), d'un modèle (15) informatique approprié parmi une pluralité (14) de modèles informatiques, dans lequel le modèle (15) informatique approprié est un modèle informatique qui est adapté aux informations de caractéristique (25a) ; et
l'utilisation du modèle (15) informatique adapté qui a été sélectionné pour estimer la valeur de charge actuelle de pneu sur la base des lectures de capteur (23).

**2.** Procédé (100) selon la revendication 1, dans lequel les informations de caractéristique (25a) relatives au pneu (3) comprennent l'un ou plusieurs parmi : le fabricant de pneu, le motif de bande de roulement, les spécifications de pneu, le composé de pneu, la rigidité de pneu, la taille de pneu, la position de montage de pneu, et les informations de rechapage.

**3.** Procédé (100) selon la revendication 1 ou la revendication 2, dans lequel la pluralité de modèles (14) comportent un modèle (15) séparé spécifiquement optimisé pour un produit de pneu connu d'un fabricant donné.

**4.** Procédé (100) selon l'une quelconque revendication précédente, comprenant en outre l'accès à des informations de caractéristique (25b) relatives au véhicule (2).

**5.** Procédé (100) selon la revendication 4, dans lequel les informations de caractéristique (25b) relatives au véhicule (2) comprennent l'un ou plusieurs parmi : un fabricant de véhicule, un type de châssis pour le véhicule, une utilisation de véhicule, un nombre d'essieux, des types de produit, un nombre de pneus, un nombre de pneus montés par essieu.

**6.** Procédé (100) selon l'une quelconque revendication précédente, comprenant : l'obtention d'informations télématiques (21) actuelles à partir du véhicule (2), facultativement, dans lequel les informations télématiques (21) comprennent l'un ou plusieurs parmi : une localisation GPS, une vitesse de véhicule, une accélération latérale/longitudinale de véhicule, un type de route, une charge de moteur, des changements de vitesse, un régime de moteur, une vitesse de roue, une position de pédale d'accélérateur/frein, une température de pneu, une température extérieure, et/ou un angle de braquage de volant.

**7.** Procédé (100) selon la revendication 6, comprenant : l'utilisation des informations télématiques (21) actuelles pour détecter des conditions favorables de mesure de charge, et l'obtention des lectures de capteur (23) lorsque des conditions favorables de mesure de charge sont détectées.

**8.** Procédé (100) selon l'une quelconque revendication précédente, dans lequel les lectures de capteur (23) comprennent l'un ou plusieurs parmi : des valeurs d'accélération radiale, une pression de gonflage, et une température d'air interne.

**9.** Procédé (100) selon l'un quelconque des clams précédents, comprenant en outre :

l'obtention de lectures de capteur (23) comportant des valeurs d'accélération radiale ;
l'analyse des valeurs d'accélération radiale afin de calculer un ou plusieurs paramètres de pneu choisis parmi : une longueur de zone de contact de pneu, une estimation d'usure de pneu, un temps de révolution de pneu, une position de montage, un emplacement d'automobile, et une estimation de kilométrage de pneu ; et l'utilisation du modèle (15) sélectionné pour estimer une valeur de charge actuelle de pneu sur la base des lectures de capteur (23) et de l'un ou plusieurs des paramètres de pneu.

**10.** Procédé (100) selon l'une quelconque revendication précédente, comprenant : la fourniture d'une rétroaction en temps réel à un utilisateur concernant la valeur de charge actuelle de pneu, facultativement, dans lequel la rétroaction comprend l'un ou plusieurs parmi : une notification du fait qu'un indice de charge de pneu est dépassé, une notification du fait que le pneu (3) fonctionne à une pression de gonflage incorrecte pour la charge actuelle, une notification du fait que le véhicule (2) dépasse une capacité de charge maximale, et une notification du fait que le véhicule (2) a une distribution de poids déséquilibrée sur ses pneus (3).

**11.** Procédé (100) selon l'une quelconque revendication précédente, dans lequel la valeur de charge actuelle de pneu n'est calculée qu'une seule fois au cours d'un déplacement effectué par le véhicule (2).

**12.** Procédé (100) selon la revendication 11, comprenant la détection du début d'un déplacement à l'aide de données (23) à partir du ou des capteurs (5) de système de surveillance de pneu (TMS) et/ou de données télématiques (21) et l'estimation de la valeur de charge actuelle de pneu en réponse à la détection du début d'un déplacement.

**13.** Procédé (100) selon l'une quelconque des revendications 1 à 10, dans lequel la valeur de charge actuelle de pneu est calculée à des intervalles de temps fixes ou à des intervalles de distance de déplacement fixes.

**14.** Procédé (100) selon l'une quelconque revendication précédente, dans lequel chacun de la pluralité de modèles (14) est pré-entraîné sur des données historiques acquises pour un pneu (3) ayant les mêmes informations de caractéristique (25a).

**15.** Système (1) destiné à surveiller une charge actuelle sur un pneu (3) et configuré pour exécuter le procédé (100) selon l'une quelconque revendication précédente, le système (1) comprenant :

un ou plusieurs capteurs (5) de TMS montés sur un pneu (3) et configurés pour obtenir les lectures de capteur (23) ;
un processeur configuré pour traiter les lectures de capteur (23) ; et une mémoire (11) configurée pour stocker les lectures de capteur (23) et/ou les paramètres sur la base des lectures de capteur (23).

Fig. 1

Fig. 2

Fig. 3

Fig. 4

Fig. 5

131 — Obtain sensor readings from TMS sensors mounted on the tire

133 — Identify a period of inactivity

135 — Identify the time instance when the sensor reading changes and compute the time difference with the start of the period of inactivity

137 — Does the time difference exceed a predefined threshold?

No

Yes

139 — Trigger a new trip event

Fig. 6

Fig. 7

Fig. 8

200

203

NSK01E

201

| Mileage: 0.5 kkm |
| Load: 2.2 t |
| Wear: 100% |

Front Axle Load
4.7 t

| Mileage: 0.5 kkm |
| Load: 2.5 t |
| Wear: 100% |

207

Truck Load:
22.2 t
Payload
8.2 t

205

| Mileage: 0.5 kkm |
| Load: 1.7 t |
| Wear: 100% |

| Mileage: 0.5 kkm |
| Load: 2.2 t |
| Wear: 100% |

2Drive Axle Load
4.7 t

| Mileage: 0.5 kkm |
| Load: 1.7 t |
| Wear: 100% |

| Mileage: 0.5 kkm |
| Load: 1.7 t |
| Wear: 100% |

| Mileage: 0.5 kkm |
| Load: 1.5 t |
| Wear: 100% |

3Drive Axle Load
4.7 t

| Mileage: 0.5 kkm |
| Load: 1.8 t |
| Wear: 100% |

| Mileage: 0.5 kkm |
| Load: 1.5 t |
| Wear: 100% |

| Mileage: 0.5 kkm |
| Load: 1.6 t |
| Wear: 100% |

4S Axle Load
3.8 t

| Mileage: 0.3 kkm |
| Load: 2.1 t |
| Wear: 100% |

| Mileage: 0.3 kkm |
| Load: 1.7 t |
| Wear: 100% |

209

Speed: 0 km/h
Lon: 12.06940 Lat: 57.59520

211

Fig. 9

**EP 4 357 168 B1**

**REFERENCES CITED IN THE DESCRIPTION**

**Patent documents cited in the description**

- EP 4060307 A1
- EP 3715151 A1
- WO 2020071249 A1